# EUROPEAN PATENT APPLICATION

(11) **EP 4 394 000 A1**
(43) Date of publication of application: **03.07.2024**
(21) Application number: 22861108.3
(22) Date of filing: 04.08.2022
(51) Int. Cl.: C08L 101/00, C08J 3/16, C08K 3/04, C08K 3/22, C08K 3/34, C08K 3/36, C08K 9/04, C08L 61/06, C08L 63/00, C08L 77/00, C08L 79/08, C08L 81/06

(54) **THERMOSETTING RESIN COMPOSITION AND HEAT CURED PRODUCT**

(30) Priority: 25.08.2021 JP 2021137162
(71) Applicant: Polyplastics-Evonik Corporation, Tokyo, 163-0913 (JP)
(72) Inventor: MUTSUDA, Mitsuteru, Tokyo 108-8230 (JP); OCHIAI, Takuya, Tokyo 163-0913 (JP); NAKAIE, Yoshiki, Tokyo 163-0913 (JP); FUJIKI, Daisuke, Tokyo 163-0913 (JP)
(74) Representative: Grünecker Patent- und Rechtsanwälte PartG mbB
(86) International application number: PCT/JP2022/030009
(87) International publication number: WO 2023/026817

(57) **Abstract**

The present disclosure is a thermosetting resin composition and the like, the thermosetting resin composition including: a first resin that is a thermosetting resin; and composite particles, wherein the composite particles contain a second resin and an inorganic filler, and an amount of the inorganic filler in a total amount of the second resin and the inorganic filler is from 0.1 to 70 wt.%.

## Description

### Technical Field

The present disclosure relates to a thermosetting resin composition and a thermoset product.

### Background Art

From the viewpoint of increasing the toughness of a cured product formed by curing a curable resin composition, a curable resin composition having a curable resin and resin particles has been used in the art (e.g., Patent Document 1).

### Citation List

### Patent Document

Patent Document 1: WO 2018/016138

### Summary of Invention

### Technical Problem

Here, the present inventor conducted a diligent study using a thermosetting resin composition having a thermosetting resin and resin particles to produce a thermoset product by varying the curing temperature, the present inventor found that higher curing temperature of the composition results in lower toughness of the thermoset product.

If the toughness of a thermoset product varies depending on the curing temperature, there may be a difference in toughness between the surface and the inside of the thermoset product. In particular, when the size of a thermoset product is large, this difference in the toughness may become significant.

In addition, when thermoset products are produced sequentially, there may be some deviation in the curing temperature over time. However, this deviation may cause a difference in toughness between thermoset products produced earlier and those produced later in the sequence.

Thus, there are demands for: a curable resin composition that forms a thermoset product whose toughness hardly varies even when the curing temperature varies; and a thermoset product formed by thermally curing the curable resin composition.

Thus, an object of the present invention is to provide: a curable resin composition that forms a thermoset product whose toughness hardly varies even when the curing temperature varies; and a thermoset product formed by thermally curing the curable resin composition.

### Solution to Problem

A first of the present disclosure relates to a thermosetting resin composition including: a first resin that is a thermosetting resin; and composite particles, in which
the composite particles contain a second resin and an inorganic filler, and
an amount of the inorganic filler in a total amount of the second resin and the inorganic filler is from 0.1 to 70 wt.%.

Preferably, the inorganic filler contains at least one selected from the group consisting of silica, titanium oxide, zinc oxide, bentonite, kaolin, and carbon black.

Preferably, the second resin contains at least one selected from the group consisting of a polyamide resin, a polyimide resin, and a poly(ether sulfone) resin.

Preferably, a median diameter of the composite particles is from 1 to 100 µm.

Preferably, a sphericity of the composite particles is 95% or greater.

Preferably, a retention ratio of plane strain fracture toughness (K_{IC}) determined by an equation below is 85% or greater:
retention ratio of plane strain fracture toughness (K_{IC}) = (plane strain fracture toughness (K_{IC}) of a cured product formed by curing the thermosetting resin composition at 200°C)/(plane strain fracture toughness (K_{IC}) of a cured product formed by curing the thermosetting resin composition at 175°C) x 100.

Preferably, the first resin contains at least one selected from the group consisting of an epoxy resin and a phenolic resin.

Preferably, an amount of the composite particles is from 1 to 20 parts by weight per 100 parts by weight of the first resin.

A second of the present disclosure relates to a thermoset product formed by thermally curing the thermosetting resin composition.

### Advantageous Effects of Invention

The present disclosure can provide: the curable resin composition that forms a thermoset product whose toughness hardly varies even when the curing temperature varies; and the thermoset product formed by thermally curing the curable resin composition.

### Brief Description of Drawings

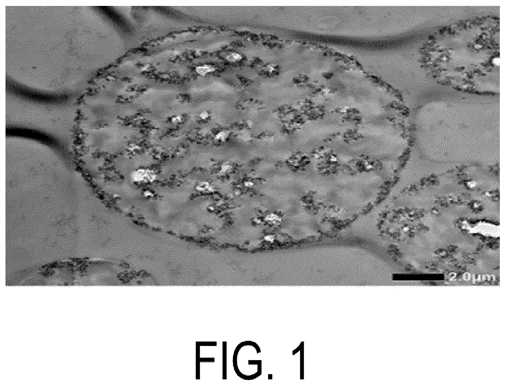

FIG. 1 is an SEM image showing a cross section of a composite particle in Example 1.

### Description of Embodiments

Hereinafter, an embodiment of the present disclosure will be described.

It should be noted that the respective configurations and the combinations thereof in the respective embodiments are only examples, and the configurations may be added, omitted, substituted, or otherwise modified as appropriate within a scope that does not depart from the spirit of the present disclosure. The present disclosure is not limited by the embodiments and is limited only by the claims.

Each aspect disclosed in the present specification can be combined with any other feature disclosed herein.

First, a thermosetting resin composition according to the present embodiment will be described.

The thermosetting resin composition according to the present embodiment has a first resin that is a thermosetting resin and composite particles.

The composite particles contain a second resin and an inorganic filler.

An amount of the inorganic filler in a total amount of the second resin and the inorganic filler is from 0.1 to 70 wt.%.

### Thermosetting resin

Examples of the first resin that is the thermosetting resin include an epoxy resin, a phenolic resin, an unsaturated polyester resin, a vinyl ester resin, an acrylic resin, a urea resin, a melamine resin, an aniline resin, a polyimide resin, and a bismaleimide resin. These thermosetting resins may be used individually, or two or more may be used in combination.

The thermosetting resin is preferably an epoxy resin or a phenolic resin and particularly preferably an epoxy resin.

Examples of the epoxy resin include a glycidyl ether type epoxy resin, a glycidyl amine type epoxy resin, a glycidyl ester type epoxy resin, an alkene oxide (e.g., such as vinylcyclohexene dioxide), and triglycidyl isocyanurate.

Examples of the glycidyl ether type epoxy resin include a bisphenol type epoxy resin, a phenol type epoxy resin, a dicyclopentadiene type epoxy resin, an epoxy resin having an aromatic skeleton (polyglycidyl ether), an alkanediol diglycidyl ether, a polyalkanediol diglycidyl ether, and an epoxy resin having an aliphatic skeleton (polyglycidyl ether).

Examples of the bisphenol type epoxy resin include a reaction product of a bisphenol and epichlorohydrin, and a reaction product of an alkylene oxide adduct of a bisphenol and epichlorohydrin.

Examples of the bisphenol include a bisphenol A type epoxy resin, a bisphenol F type epoxy resin, a bisphenol S type epoxy resin, and a brominated bisphenol type epoxy resin.

In the alkylene oxide adduct of the bisphenol, the number of moles of the alkylene oxide added per mol of the hydroxyl group of the bisphenol is, for example, 1 mol or more (e.g., from 1 to 20 mol), preferably from 1 to 15 mol, and more preferably from 1 to 10 mol.

Examples of the phenol type epoxy resin include a phenol novolac type epoxy resin, a cresol novolac type epoxy resin, a naphthol novolac type epoxy resin, a bisphenol A novolac type epoxy resin, a bisphenol F novolac type epoxy resin, a biphenyl skeleton-containing phenol novolac resin, and a xylylene skeleton-containing phenol novolac resin.

Examples of the epoxy resin having an aromatic skeleton (polyglycidyl ether) include a glycidyl ether having a naphthalene skeleton. Examples of the glycidyl ether having a naphthalene skeleton include a di(glycidyloxy)naphthalene and bis[2,7-di(glycidyloxy)naphthyl]methane.

Examples of the di(glycidyloxy)naphthalene include 1,5-di(glycidyloxy)naphthalene.

Examples of the alkanediol diglycidyl ether include a C₂₋₁₀ alkanediol diglycidyl ether.

Examples of the C₂₋₁₀ alkanediol diglycidyl ether include butanediol diglycidyl ether, neopentyl glycol diglycidyl ether, and 1,6-hexanediol diglycidyl ether.

Examples of the polyalkanediol diglycidyl ether include a poly(C₂₋₄ alkanediol) diglycidyl ether.

Examples of the poly(C₂₋₄ alkanediol) diglycidyl ether include polypropylene glycol) diglycidyl ether.

Examples of the epoxy resin having an aliphatic skeleton (polyglycidyl ether) include a glycidyl polyether of a polyol.

Examples of the polyol include an alkanetriol, an alkanetetraol, an alkanepentaol, and an alkanehexaol. Examples of the alkanetriol include a C₃₋₁₀ alkanetriol. Examples of the alkanetetraol include a C₃₋₁₀ alkanetetraol.

Examples of the glycidyl polyether include a diglycidyl ether, a triglycidyl ether, a tetraglycidyl ether, a pentaglycidyl ether, and a hexaglycidyl ether.

Examples of the glycidyl polyether of a polyol include trimethylolpropane diglycidyl ether, trimethylolpropane triglycidyl ether, glycerin diglycidyl ether, and glycerin triglycidyl ether.

Examples of the glycidylamine type epoxy resin include tetraglycidyl diaminodiphenylmethane, triglycidyl-p-aminophenol, triglycidyl aminocresol, diglycidylaniline, and N,N-diglycidyl-4-glycidyloxyaniline.

Examples of the glycidyl ester type epoxy resin include a diglycidyl ester of a dicarboxylic acid.

Examples of the dicarboxylic acid include an aromatic dicarboxylic acid and a hydrogenated product of an aromatic dicarboxylic acid.

Examples of the aromatic dicarboxylic acid include terephthalic acid, isophthalic acid, phthalic acid, tetrahydrophthalic acid, and hexahydrophthalic acid.

These epoxy resins may be used individually, or two or more may be used in combination.

Among these epoxy resins, in terms of strength and the like, an epoxy resin having an aromatic skeleton is preferred, and a bisphenol type epoxy resin is particularly preferred.

Examples of the phenolic resin include a resin having one or more, preferably two or more phenolic hydroxyl groups per molecule.

Examples of the phenolic resin include a novolac type phenolic resin, a resol type phenolic resin, and a polyoxystyrene resin.

The novolac type phenolic resin is a phenol, an aldehyde, and a condensate. The novolac type phenolic resin is formed, for example, by condensation polymerization of a phenol and an aldehyde in the presence of an acidic catalyst.

The resol type phenolic resin is a phenol, an aldehyde, and a condensate. The resol type phenolic resin is formed, for example, by condensation polymerization of a phenol and an aldehyde in the presence of an alkaline catalyst.

Examples of the phenol include phenol, cresol, trimethylphenol, xylenol, resorcinol, catechol, butylphenol, octylphenol, nonylphenol, phenylphenol, dihydroxybenzene, bisphenol A, and naphthol.

Examples of the cresol include o-cresol, m-cresol, and p-cresol.

Examples of the trimethylphenol include 2,3,5-trimethylphenol.

Examples of the xylenol include 2,3-xylenol, 2,4-xylenol, 2,5-xylenol, 3,4-xylenol, and 3,5-xylenol.

Examples of the aldehyde include formaldehyde, paraformaldehyde, acetaldehyde, benzaldehyde, hydroxybenzaldehyde, glyoxal, glutaraldehyde, terephthalaldehyde, isophthalaldehyde, propionaldehyde, butyraldehyde, isobutyraldehyde, 3-methylbutyraldehyde, p-tolylaldehyde, and phenylacetaldehyde.

Examples of the hydroxybenzaldehyde include o-hydroxybenzaldehyde, m-hydroxybenzaldehyde, and p-hydroxybenzaldehyde.

Examples of the novolac type phenolic resin include a novolac resin (a condensate of phenol and formaldehyde) and a cresol novolac resin (a condensate of cresol and formaldehyde).

One of the phenolic resins may be used individually, or two or more may be used in combination.

A hydroxyl equivalent of the phenolic resin is preferably from 50 to 500 g/eq. and more preferably from 100 to 350 g/eq.

The thermosetting resin composition according to the present embodiment has the first resin that is a thermosetting resin in an amount preferably of 40 to 99 wt.% and more preferably from 80 to 97 wt.%.

### Composite particles

The composite particles contain the second resin and an inorganic filler.

Examples of the second resin include a polyamide resin, a polyimide resin, and a poly(ether sulfone) resin.

Examples of the polyamide resin include an aliphatic polyamide, an alicyclic polyamide, and an aromatic polyamide.

The polyamide resin may be a homopolyamide resin or a copolyamide resin.

Examples of an end group of the polyamide resin include an amino group, a carboxyl group, and an acid anhydride.

Examples of the aliphatic polyamide resin include a polyamide of an aliphatic diamine component and an aliphatic dicarboxylic acid component; a polyamide of a lactam; a polyamide of an aminocarboxylic acid; and a polyamide resin of an aliphatic diamine component, an aliphatic dicarboxylic acid component, and a lactam and/or an aminocarboxylic acid.

Examples of the aliphatic diamine component include a C4-16 alkylenediamine (e.g., such as tetramethylenediamine, hexamethylenediamine, and dodecanediamine). The aliphatic diamine component is preferably a C6-14 alkylenediamine and more preferably a C6-12 alkylenediamine.

Examples of the aliphatic dicarboxylic acid component include a C4-20 alkane dicarboxylic acid (e.g., such as adipic acid, sebacic acid, and dodecanedioic acid). The aliphatic dicarboxylic acid component is preferably a C5-16 alkane dicarboxylic acid and more preferably a C6-14 alkane dicarboxylic acid.

Examples of the lactam include a lactam having from 4 to 20 carbons (e.g., such as ε-caprolactam and ω-laurolactam). The lactam is preferably a lactam having from 4 to 16 carbons.

Examples of the aminocarboxylic acid include a C4-20 aminocarboxylic acid (e.g., such as ω-aminoundecanoic acid). The aminocarboxylic acid is preferably a C4-16 aminocarboxylic acid and more preferably a C6-14 aminocarboxylic acid.

Examples of the aliphatic polyamide include polyamide 6, polyamide 11, polyamide 12, polyamide 46, polyamide 66, polyamide 610, polyamide 611, polyamide 612, polyamide 613, polyamide 1010, polyamide 66/11, polyamide 66/12, and polyamide 6/12/612.

Examples of the alicyclic polyamide include a polyamide containing at least one selected from an alicyclic diamine component and an alicyclic dicarboxylic acid component as a constituent component.

The alicyclic polyamide is preferably an alicyclic polyamide resin containing, as the diamine component and/or the dicarboxylic acid component, the aliphatic diamine component and/or the aliphatic dicarboxylic acid component exemplified above together with the alicyclic diamine component and/or the alicyclic dicarboxylic acid component. Such an alicyclic polyamide is highly transparent and is known as what is called a transparent polyamide.

Examples of the alicyclic diamine component include a diaminocycloalkane, a bis(aminocycloalkyl)alkane, and a hydrogenated xylylenediamine.

Examples of the diaminocycloalkane include diaminocyclohexane. The diaminocycloalkane is preferably a diamino C5-10 cycloalkane.

Examples of the bis(aminocycloalkyl)alkane include bis(4-aminocyclohexyl)methane, bis(4-amino-3-methylcyclohexyl)methane, and 2,2-bis(4'-aminocyclohexyl)propane. The bis(aminocycloalkyl)alkane is preferably a bis(amino C5-8 cycloalkyl) C1-3 alkane.

The alicyclic diamine component may have a substituent, such as, for example, an alkyl group.

The alkyl group is preferably a C1-6 alkyl group, more preferably a C1-4 alkyl group, and even more preferably a C1-2 alkyl group (such as a methyl group or an ethyl group).

Examples of the alicyclic dicarboxylic acid include a cycloalkane dicarboxylic acid (e.g., such as cyclohexane-1,4-dicarboxylic acid and cyclohexane-1,3-dicarboxylic acid).

Representative examples of alicyclic polyamide resins include a condensate of an alicyclic diamine component [e.g., such as a bis(aminocyclohexyl)alkane] and an aliphatic dicarboxylic acid component [e.g., such as an alkane dicarboxylic acid (e.g., such as a C₄₋₂₀ alkane dicarboxylic acid component)].

The aromatic polyamide is a concept including a polyamide containing at least either one of an aromatic diamine component or an aromatic dicarboxylic acid component as a constituent unit.

Examples of the aromatic polyamide include a polyamide in which both constituent units, a diamine component and a dicarboxylic acid component, are aromatic components (also referred to such as a "wholly aromatic polyamide" or an "aramid").

The aromatic polyamide may be a modified polyamide. Examples of the modified polyamide include a polyamide having a branched chain structure.

Examples of the aromatic diamine component include m-xylylenediamine.

Examples of the aromatic dicarboxylic acid component include terephthalic acid and isophthalic acid. In addition, the aromatic dicarboxylic acid component may be a dimer acid or the like.

The polyimide resin preferably contains a bismaleimide compound having at least two unsaturated N-substituted maleimide groups in the molecular structure.

Examples of the polyimide resin include N,N'-ethylene bismaleimide, N,N'-hexamethylene bismaleimide, N,N'-(1,3-phenylene)bismaleimide, N,N'-[1,3-(2-methylphenylene)]bismaleimide, N,N'-[1,3-(4-methylphenylene)]bismaleimide, N,N'-(1,4-phenylene)bismaleimide, bis(4-maleimidophenyl)methane, bis(3-methyl-4-maleimidophenyl)methane, 3,3-dimethyl-5,5-diethyl-4,4-diphenylmethanebismaleimide, bis(4-maleimidophenyl)ether, bis(4-maleimidophenyl)sulfone, bis(4-maleimidophenyl)sulfide, bis(4-maleimidophenyl)ketone, bis(4-maleimidocyclohexyl)methane, 1,4-bis(4-maleimidophenyl)cyclohexane, 1,4-bis(maleimidomethyl)cyclohexane, 1,4-bis(maleimidomethyl)benzene, 1,3-bis(4-maleimidophenoxy)benzene, 1,3-bis(3-maleimidophenoxy)benzene, bis[4-(3-maleimidophenoxy)phenyl]methane, bis[4-(4-maleimidophenoxy)phenyl]methane, 1,1-bis[4-(3-maleimidophenoxy)phenyl]ethane, 1,1-bis[4-(4-maleimidophenoxy)phenyl]ethane, 1,2-bis[4-(3-maleimidophenoxy)phenyl]ethane, 1,2-bis[4-(4-maleimidophenoxy)phenyl]ethane, 2,2-bis[4-(3-maleimidophenoxy)phenyl]propane, 2,2-bis[4-(4-maleimidophenoxy)phenyl]propane, 2,2-bis[4-(3-maleimidophenoxy)phenyl]butane, 2,2-bis[4-(4-maleimidophenoxy)phenyl]butane, 2,2-bis[4-(3-maleimidophenoxy)phenyl]-1,1,1,3,3,3-hexafluoropropane, 2,2-bis[4-(4-maleimidophenoxy)phenyl]-1,1,1,3,3,3-hexafluoropropane, 4,4-bis(3-maleimidophenoxy)biphenyl, 4,4-bis(4-maleimidophenoxy)biphenyl, bis[4-(3-maleimidophenoxy)phenyl]ketone, bis[4-(4-maleimidophenoxy)phenyl]ketone, 2,2'-bis(4-maleimidophenyl)disulfide, bis(4-maleimidophenyl)disulfide, bis[4-(3-maleimidophenoxy)phenyl]sulfide, bis[4-(4-maleimidophenoxy)phenyl]sulfide, bis[4-(3-maleimidophenoxy)phenyl]sulfoxide, bis[4-(4-maleimidophenoxy)phenyl]sulfoxide, bis[4-(3-maleimidophenoxy)phenyl]sulfone, bis[4-(4-maleimidophenoxy)phenyl]sulfone, bis[4-(3-maleimidophenoxy)phenyl]ether, bis[4-(4-maleimidophenoxy)phenyl]ether, 1,4-bis[4-(4-maleimidophenoxy)-α,α-dimethylbenzyl]benzene, 1,3-bis[4-(4-maleimidophenoxy)-α,α-dimethylbenzyl]benzene, 1,4-bis[4-(3-maleimidophenoxy)-α,α-dimethylbenzyl]benzene, 1,3-bis[4-(3-maleimidophenoxy)-α,α-dimethylbenzyl]benzene, 1,4-bis[4-(4-maleimidophenoxy)-3,5-dimethyl-α,α-dimethylbenzyl]benzene, 1,3-bis[4-(4-maleimidophenoxy)-3,5-dimethyl-α,α-dimethylbenzyl]benzene, 1,4-bis[4-(3-maleimidophenoxy)-3,5-dimethyl-α,α-dimethylbenzyl]benzene, 1,3-bis[4-(3-maleimidophenoxy)-3,5-dimethyl-α,α-dimethylbenzyl]benzene, and poly(phenylmethane maleimide). These maleimide compounds can be used individually or in combination of two or more.

Examples of the poly(ether sulfone) resin include a poly(ether sulfone) resin containing 4,4'-dichlorophenyl sulfone and 1,4-dihydroxyphenyl as constituent units.

These second resins may be used individually, or two or more may be used in combination.

The second resin is preferably a semi-crystalline polyamide (e.g., such as an alicyclic polyamide or an aliphatic polyamide) from the viewpoint of a high reinforcing effect.

A number average molecular weight of the second resin is, for example, from 8000 to 200000, preferably from 9000 to 150000, and even more preferably from 10000 to 100000.

In the present embodiment, the number average molecular weight is determined from the molecular weight distribution measured by gel permeation chromatography (GPC) using a chloroform eluent, with calibration with polystyrene. A column suitable for measuring the molecular weight is to be used as the column in the GPC.

The melting point of the second resin is, for example, 150°C or higher (e.g., from 155 to 350°C), preferably 160°C or higher (e.g., from 165 to 300°C), and more preferably 170°C or higher (e.g., from 175 to 270°C).

In the present embodiment, the melting point can be measured, for example, using a differential scanning calorimeter (DSC).

The specific procedure is as follows. First, about 5 mg of a sample for measuring a melting point is prepared, and two metallic (e.g., aluminum) containers with the same shape and the same weight are prepared.

The sample is then placed in one of the two containers, and the other container is left empty.

Then, the melting point can be determined from a DSC curve obtained when the container containing the sample and the empty container as a reference are set in a DSC, and the temperature of the sample is increased at a temperature increase rate of 10°C/min under a nitrogen gas stream.

The melting point can be determined by subjecting the same sample to differential scanning calorimetry twice and is determined as the peak value of the second DSC curve.

A glass transition temperature (Tg) of the second resin is, for example, 30°C or higher (e.g., from 50 to 200°C), preferably from 100 to 150°C, and even more preferably from 110 to 145°C (particularly from 120 to 140°C).

In the present embodiment, the glass transition temperature (Tg) means midpoint glass transition temperature measured using a differential scanning calorimeter (DSC).

The midpoint glass transition temperature can be determined based on the method described in JIS K7121-1987 "Testing Methods for Transition Temperatures of Plastics".

That is, first, about 5 mg of a sample for measuring the midpoint glass transition temperature is prepared, and two metallic (e.g., aluminum) containers with the same shape and the same weight are prepared.

The sample is then placed in one of the two containers, and the other container is left empty.

Then, the midpoint glass transition temperature can be determined from a DSC curve obtained when the container containing the sample and the empty container as a reference are set in a DSC, and the temperature of the sample is increased at a temperature increase rate of 10°C/min under a nitrogen gas stream.

The crystallinity of the second resin is preferably 80% or less (e.g., from 1 to 75%) and more preferably 50% or less (e.g., from 10 to 50%).

In the present embodiment, the crystallinity can be measured based on wide-angle x-ray diffraction (WAXD).

For example, crystalline peaks and amorphous halos are separated by fitting using powder X-ray analysis software ("PDXL Ver. 2.3.1.0" available from Rigaku Corporation) (method, FP method; peak shape, log-normal distribution; and background refinement, none) to a curve obtained by wide-angle x-ray diffraction, and the crystallinity (%) can be determined from an equation below. Crystallinity = [integrated intensity total sum of crystal diffraction peaks (cps·deg)]/[integrated intensity total sum of crystal diffraction peaks and amorphous halos (cps·deg)] x 100%

The composite particles contain the second resin in an amount preferably of 50 to 99.5 wt.%, more preferably of 60 to 99 wt.%, and even more preferably of 70 to 95 wt.%.

Examples of an inorganic substance constituting the inorganic filler include silica, titanium oxide, zinc oxide, bentonite, kaolin, carbon black, calcium carbonate, magnesium carbonate, clay, calcium phosphate, hydroxyapatite, mica, talc, quartz, glass, diatomaceous earth, nepheline syenite, cristobalite, wollastonite, aluminum hydroxide, iron oxide, aluminum oxide, calcium sulfate, barium sulfate, dolomite, silicon carbide, silicon nitride, boron nitride, and graphite.

The inorganic substance is preferably silica, titanium oxide, zinc oxide, bentonite, kaolin, or carbon black.

Examples of the silica include fumed silica and colloidal silica.

In the thermosetting resin composition according to the present embodiment, the composite particles contain the inorganic filler; this makes the toughness of a thermoset product vary little even when the curing temperature varies.

The inorganic filler may be an inorganic filler surface-treated with an organosilicon compound.

That is, in the present embodiment, the "inorganic filler" is a concept including an "inorganic filler surface-treated with an organosilicon compound".

Examples of the organosilicon compound include hexamethyldisilazane, dimethyldichlorosilane, octylsilane, silicone oil, dimethylpolysiloxane, aminosilane, aminoalkylsilane, methacrylsilane, acrylsilane, vinylsilane, phenylsilane, mercaptosilane, epoxysilane, and a silane coupling agent.

A median diameter of the inorganic fillers is preferably from 0.01 to 100 µm, more preferably from 0.1 to 100 µm, even more preferably from 1 to 50 µm, and still more preferably from 8 to 20 µm.

The median diameter of the inorganic fillers can be determined as follows.

First, an image is obtained by photographing the inorganic fillers with a scanning electron microscope (SEM).

Next, 30 or more inorganic fillers in the image are selected at random, and the area of each selected inorganic filler is determined. When the number of inorganic fillers in the image is less than 30, areas of all inorganic fillers are each determined.

Then, the diameter of the perfect circle with the same area as each determined area is defined as the diameter of each inorganic filler.

Next, the median value of the determined diameters of the inorganic fillers is defined as the median diameter.

In addition, the median diameter of the inorganic fillers means a number-based median diameter of the inorganic fillers.

As for the inorganic fillers, a plurality of primary particles aggregates into secondary particles and is present in the inorganic fillers, and the "median diameter of the inorganic fillers" means the median diameter of the inorganic fillers including the secondary particles.

The amount of the inorganic filler in a total amount of the second resin and the inorganic filler is from 0.1 to 70 wt.%, preferably from 1 to 50 wt.%, and more preferably from 5 to 40 wt.%.

When the inorganic filler contains an "inorganic filler surface-treated with an organosilicon compound", the amount of the inorganic filler also includes the amount of the organosilicon compound.

In addition, the composite particles may further contain an additive.

Examples of the additive include a stabilizer, a colorant, a dispersant, a preservative, an antioxidant, and an antifoaming agent.

These additives may be used individually, or two or more may be used in combination.

A total of the content ratio of the additive is, for example, 10 parts by weight or less (e.g., from 0.01 to 10 parts by weight) per 100 parts by weight of the second resin.

A median diameter of the composite particles can be selected from the range, for example, of 2 µm or greater (e.g., from 3 to 40 µm), preferably 4 µm or greater (e.g., from 5 to 40 µm), more preferably 6 µm or greater (e.g., from 7 to 35 µm), still more preferably 8 µm or greater (e.g., from 9 to 30 µm), and particularly preferably 10 µm or greater (e.g., from 11 to 30 µm).

The median diameter of the composite particles means a value determined by dispersing the composite particles in water and performing the measurement with a laser diffraction/scattering particle size distribution analyzer. In addition, the median diameter of the composite particles means a volume-based median diameter of the composite particles.

Furthermore, the median diameter of the composite particles means the median diameter of the composite particles of the primary particles.

A sphericity of the composite particles is preferably 95% or greater and 100% or less, more preferably 97% or greater and 100% or less, and even more preferably 99% or greater and 100% or less.

In the present embodiment, the sphericity of the particles can be measured by the following method. The particles are observed with a scanning electron microscope (SEM) to measure the major axes and the minor axes of 30 randomly selected particles, and the minor axis/major axis ratio of each particle is determined. Then, the arithmetic mean value of the minor axis/major axis ratios is determined as the sphericity of the particles. The particles with a sphericity closer to 1 can be determined as a true sphere.

The water absorption rate of the composite particles is, for example, 2.5 wt.% or less, preferably 2.0 wt.% or less (e.g., 1.5 wt.% or less), preferably 2.0 wt.% or less (e.g., 1.5 wt.% or less), and more preferably 1.0 wt.% or less (particularly 0.8 wt.% or less).

In addition, the water absorption rate of the composite particles is, for example, 0.01 wt.% or greater, preferably 0.05 wt.% or greater (e.g., 0.08 wt.% or greater), preferably 0.055 wt.% or greater (e.g., 0.06 wt.% or greater), and more preferably 0.065 wt.% or greater (particularly 0.07 wt.% or greater).

With the water absorption rate of the composite particles of 0.5 wt.% or greater, the thermosetting resin composition according to the present embodiment has an advantage of increased toughness.

In addition, with the water absorption rate of the composite particles of 2.5 wt.% or less, the thermosetting resin composition according to the present embodiment has an advantage of increased toughness. Furthermore, with the water absorption rate of the composite particles of 2.5 wt.% or less, the thermosetting resin composition according to the present embodiment can have an advantage of being less likely to generate a void in the composite particles.

The water absorption rate of the composite particles can be measured by the Karl Fischer method.

As the apparatus, a trace moisture analyzer ("CA-200" available from Mitsubishi Chemical Analytech Co., Ltd.) equipped with a moisture vaporizer ("Model No. VA-200" available from Mitsubishi Chemical Analytech Co., Ltd.) can be used.

The measurement temperature can be 210°C.

An amount of the composite particles is preferably from 3 to 30 parts by weight and more preferably from 5 to 20 parts by weight per 100 parts by weight of the first resin.

### Method for producing composite particles

Examples of the method for producing the composite particles include a freeze milling method, a chemical milling method, a polymerization method, a forced emulsification method, and a laser method.

The method for producing the composite particles is preferably a forced emulsification method.

The forced emulsification method includes: (A) melt-kneading the second resin, the inorganic filler, and an aqueous medium incompatible with the second resin by heating to yield a melt-kneaded product; (B) cooling the melt-kneaded product; (C) removing the aqueous medium from the cooled melt-kneaded product with a hydrophilic solvent or water to yield precursor particles; and (D) adjusting the water absorption amount of the precursor particles to produce the composite particles.

The aqueous medium used in step (A) above is selected according to the type of second resin.

Examples of the aqueous medium include a heat-melting saccharide and a water-soluble macromolecule.

Examples of the heat-melting saccharide include an oligosaccharide (e.g., such as sucrose and maltotriose) and a sugar alcohol (e.g., such as xylitol, erythritol, sorbitol, and mannitol).

Examples of the water-soluble macromolecule include a water-soluble synthetic macromolecule (e.g., such as poly(ethylene glycol), poly(vinyl alcohol), poly(sodium acrylate), and polyacrylamide), and a polysaccharide (e.g., such as starch and methyl cellulose).

These aqueous media can be used individually or in combination of two or more.

The aqueous medium is preferably poly(ethylene glycol) from the viewpoint of ease of particle size adjustment of the composite particles to an appropriate size.

A weight ratio of the aqueous medium is, for example, from 10 to 100 parts by weight, preferably from 20 to 100 parts by weight, and more preferably from 30 to 100 parts by weight of the aqueous medium per 100 parts by weight of the second resin.

A volume ratio of the aqueous medium is, for example, 50 vol.% or greater (e.g., from 50 to 90 vol.%) relative to a total volume of the aqueous medium and the second resin.

A temperature during the melt-kneading in step (A) above is any temperature not lower than the melting point or softening point of the second resin and is, for example, 250°C or higher (e.g., from 250 to 350°C), preferably from 260 to 320°C, and more preferably from 270 to 300°C.

In step (B) above, the melt-kneaded product may be left to stand for cooling or may be subjected to forced cooling, but from the viewpoint of productivity, the melt-kneaded product is preferably subjected to forced cooling.

The cooling rate of the melt-kneaded product is preferably, for example, 1°C/min or greater (e.g., from 1 to 10°C/min).

Examples of the hydrophilic solvent used in step (C) above include an alcohol (such as ethanol) and a water-soluble ketone (such as acetone).

In step (D) above, with adjustment of the temperature and humidity around the precursor particles, the aqueous medium is removed and the water absorption amount of the precursor particles is adjusted. As a result, the composite particles can be formed.

### Monofunctional epoxy compound

When the first resin that is the thermosetting resin contains an epoxy resin, the thermosetting resin composition according to the present embodiment may contain a monofunctional epoxy compound.

Examples of the monofunctional epoxy compound include a monoglycidyl ether and an alkene oxide (e.g., such as octylene oxide and styrene oxide).

Examples of the monoglycidyl ether include an alkyl glycidyl ether (e.g., such as 2-ethylhexyl glycidyl ether), an alkenyl glycidyl ether (e.g., such as allyl glycidyl ether), and an aryl glycidyl ether (e.g., such as phenyl glycidyl ether).

In the thermosetting resin composition according to the present embodiment, a weight ratio of the epoxy resin to the monofunctional epoxy compound is, for example, from 99/1 to 50/50, preferably from 97/3 to 60/40, and more preferably from 95/5 to 70/30.

### Curing Agent

The thermosetting resin composition according to the present embodiment may contain a curing agent.

The curing agent can be appropriately selected according to the type of thermosetting resin described above.

Examples of the curing agent when the thermosetting resin is an epoxy resin include an amine-based curing agent, a phenolic resin-based curing agent, an acid anhydride-based curing agent, a polymercaptan-based curing agent, and a latent curing agent.

Examples of the amine-based curing agent include an aromatic amine-based curing agent, an aliphatic amine-based curing agent, an imidazole, a salt of an imidazole, and an alicyclic amine-based curing agent.

Examples of the aromatic amine-based curing agent include a polyaminoarene, a polyamino-alkylarene, a poly(aminoalkyl)arene, a poly(aminoaryl)alkane, a poly(amino-alkylaryl)alkane, bis(aminoarylalkyl)arene, a di(aminoaryl)ether (e.g., such as diaminodiphenyl ether), di(aminoaryloxy)arene (e.g., such as 1,3-bis(3-aminophenoxy)benzene), and di(aminoaryl)sulfone (e.g., such as diaminodiphenyl sulfone).

Examples of the polyaminoarene include a diaminoarene (e.g., such as p-phenylenediamine and m-phenylenediamine). Examples of the polyamino-alkylarene include a diamino-alkylarene (e.g., such as diethyltoluenediamine). Examples of the poly(aminoalkyl)arene include a di(aminoalkyl)arene (e.g., such as xylylenediamine).

Examples of the poly(aminoaryl)alkane include a di(aminoaryl)alkane (e.g., such as diaminodiphenylmethane). Examples of the poly(amino-alkylaryl)alkane include a di(amino-alkylaryl)alkane (e.g., such as 4,4'-methylene bis(2-ethyl-6-methylaniline)).

Examples of the bis(aminoarylalkyl)arene include 1,3-bis[2-(4-aminophenyl)-2-propyl)]benzene and 1,4-bis[2-(4-aminophenyl)-2-propyl)]benzene.

Examples of the aliphatic amine-based curing agent include ethylenediamine, hexamethylenediamine, diethylenetriamine, triethylenetetramine, tetraethylenepentamine, and diethylaminopropylamine.

Examples of the alicyclic amine-based curing agent include menthenediamine, isophoronediamine, bis(4-amino-3-methylcyclohexyl)methane, 3,9-bis(3-aminopropyl)-2,4,8,10-tetraoxaspiro[5.5]undecane, and norbomanediamine.

Examples of the imidazole include an alkylimidazole and an arylimidazole.

Examples of the alkylimidazole include 2-methylimidazole, 2-phenylimidazole, 2-heptadecylimidazole, and 2-ethyl-4-methylimidazole.

Examples of the arylimidazole include 2-phenylimidazole, 2-phenyl-4-methylimidazole, 2-phenyl-4-methyl-5-hydroxymethylimidazole, and 1-benzyl-2-phenylimidazole.

Examples of the salt of an imidazole include a salt of an imidazole and formic acid, a salt of an imidazole and phenol, a salt of an imidazole and a phenol novolac, and a salt of an imidazole and carbonic acid.

Examples of the phenolic resin-based curing agent include a novolac resin and a cresol novolac resin.

Examples of the acid anhydride curing agent include an aliphatic dicarboxylic anhydride, an alicyclic dicarboxylic anhydrides, and an aromatic dicarboxylic anhydride.

Examples of the aliphatic dicarboxylic anhydride include dodecenylsuccinic anhydride.

Examples of the alicyclic dicarboxylic anhydride include tetrahydrophthalic anhydride, methyltetrahydrophthalic anhydride, and hexahydrophthalic anhydride.

Examples of the aromatic dicarboxylic anhydride include phthalic anhydride, trimellitic anhydride, pyromellitic anhydride, and benzophenonetetracarboxylic dianhydride.

Examples of the latent curing agent include a boron trifluoride-amine complex, dicyandiamide, and carboxylic acid hydrazide.

These curing agents may be used individually, or two or more may be used in combination. The curing agent may act as a curing accelerator.

The curing agent is preferably an amine-based curing agent (e.g., an aromatic amine-based curing agent).

A content ratio of the curing agent can be appropriately selected according to the type of thermosetting resin (e.g., such as epoxy equivalent), the type of curing agent, and the like but is, for example, from 0.1 to 300 parts by weight, preferably from 1 to 250 parts by weight, more preferably from 3 to 200 parts by weight (e.g., from 4 to 150 parts by weight), and particularly preferably from 5 to 100 parts by weight per 100 parts by weight of the thermosetting resin.

### Curing accelerator

The thermosetting resin composition according to the present embodiment may contain a curing accelerator.

The curing accelerator can be appropriately selected according to the type of thermosetting resin described above.

Examples of the curing accelerator when the thermosetting resin is an epoxy resin include a phosphine, an amine, and a salt of an amine.

Examples of the phosphine include ethylphosphine, propylphosphine, trialkylphosphine, phenylphosphine, and triphenylphosphine.

Examples of the amine include a secondary and tertiary amine.

Examples of the secondary and tertiary amine include triethylamine, piperidine, benzyldimethylamine, triethanolamine, dimethylaminoethanol, triethylenediamine, tris(dimethylaminomethyl)phenol, and N,N-dimethylpiperazine.

These curing accelerators may be used individually, or two or more may be used in combination.

A content ratio of the curing accelerator is, for example, from 0.01 to 100 parts by weight, preferably from 0.05 to 50 parts by weight, and more preferably from 1 to 30 parts by weight per 100 parts by weight of the thermosetting resin.

### Additional component

The thermoplastic resin composition according to the present embodiment may further contain at least any one of resin particles, a thermoplastic resin, or an additive as an additional component as necessary.

Examples of the resin particles include polyester particles, polyacetal particles, polysulfide particles, polysulfone particles (including poly(ether sulfone) particles), poly(ether ketone) particles, and polyolefin particles. Examples of the polyester particles include aromatic polyester particles (e.g., such as poly(ethylene terephthalate)).

Examples of the thermoplastic resin include an acrylic resin, a polyolefin resin (e.g., such as polypropylene), a polyamide resin, a polyester resin, a polycarbonate resin, a poly(phenylene ether) resin, a poly(phenylene sulfide) resin, a polysulfone resin, a poly(ether ketone) resin, a poly(ether ether ketone) resin, a polyimide resin, and a poly(ether imide) resin.

Examples of the polyester resin include an aromatic polyester resin (e.g., such as poly(ethylene terephthalate)).

Examples of the additive include a stabilizer, a filler (non-fibrous filler), a colorant, a dispersant, a preservative, an antioxidant, and an antifoaming agent.

A content ratio of the additional component is, for example, 10 parts by weight or less (e.g., from 0.01 to 10 parts by weight) per 100 parts by weight of the thermosetting resin.

In the thermosetting resin composition according to the present embodiment, a retention ratio of the plane strain fracture toughness (K_{IC}) determined by an equation below is preferably 85% or greater (e.g., from 85 to 100%), more preferably 90% or greater, and even more preferably 95% or greater.

Retention ratio of plane strain fracture toughness (K_{IC}) = (plane strain fracture toughness (K_{IC}) of a cured product formed by curing the thermosetting resin composition at 200°C)/K_{IC} of a cured product formed by curing the thermosetting resin composition at 175°C) x 100

The plane strain fracture toughness (K_{IC}) of the cured product formed by curing the thermosetting resin composition at 175°C can be determined in accordance with ASTM D5045.

Specifically, first, the thermosetting resin composition is poured into a mold (47 mm (length) x 12 mm (width) x 4 mm (thickness)). The thermosetting resin composition is then heated at 175°C until the thermosetting resin composition is sufficiently cured, and a cured product with a pre-crack is formed.

To form a pre-crack in the cured product, a protrusion corresponding to the pre-crack is formed on the inner surface of the mold.

Next, using the cured product with a pre-crack, the plane strain fracture toughness (K_{IC}) of the cured product formed by curing the thermosetting resin composition at 175°C can be determined in accordance with ASTM D5045.

In addition, the plane strain fracture toughness (K_{IC}) of the cured product formed by curing the thermosetting resin composition at 200°C can also be determined in accordance with ASTM D5045.

Specifically, "plane strain fracture toughness (K_{IC}) of the cured product formed by curing the thermosetting resin composition at 200°C" can be determined in the same manner as in the "plane strain fracture toughness (K_{IC}) of the cured product formed by curing the thermosetting resin composition at 175°C" as described above, except that the heating temperature of 175°C is changed to a heating temperature of 200°C.

A thermoset product according to the present embodiment is a thermoset product formed by thermally curing the thermosetting resin composition according to the present embodiment.

A shape of the thermoset product according to the present embodiment may be a one-dimensional shape (such as a rod shape), a two-dimensional shape (such as a sheet shape), or a three-dimensional shape.

### Disclosure items

Each of the following items is a disclosure of a preferred embodiment.

### Item 1

A thermosetting resin composition having: a first resin that is a thermosetting resin; and composite particles, in which
the composite particles contain a second resin and an inorganic filler, and
an amount of the inorganic filler in a total amount of the second resin and the inorganic filler is from 0.1 to 70 wt.%.

### Item 2

The thermosetting resin composition according to item 1, in which the inorganic filler contains at least one selected from the group consisting of silica, titanium oxide, zinc oxide, bentonite, kaolin, and carbon black.

### Item 3

The thermosetting resin composition according to item 1 or 2, in which the second resin contains at least one selected from the group consisting of a polyamide resin, a polyimide resin, and a poly(ether sulfone) resin.

### Item 4

The thermosetting resin composition according to any one of items 1 to 3, in which a median diameter of the composite particles is from 1 to 100 µm.

### Item 5

The thermosetting resin composition according to any one of items 1 to 4, in which a sphericity of the composite particles is 95% or greater.

### Item 6

The thermosetting resin composition according to any one of items 1 to 5, in which a retention ratio of plane strain fracture toughness (K_{IC}) determined by an equation below is 85% or greater: retention ratio of plane strain fracture toughness (KIC) = (plane strain fracture toughness (KIC) of a cured product formed by curing the thermosetting resin composition at 200°C)/(plane strain fracture toughness (KIC) of a cured product formed by curing the thermosetting resin composition at 175°C) x 100.

### Item 7

The thermosetting resin composition according to any one of items 1 to 6, in which the first resin contains at least one selected from the group consisting of an epoxy resin and a phenolic resin.

### Item 8

The thermosetting resin composition according to any one of items 1 to 7, in which an amount of the composite particles is from 1 to 20 parts by weight per 100 parts by weight of the first resin.

### Item 9

A thermoset product formed by thermally curing the thermosetting resin composition described in any one of items 1 to 8.

### Examples

Next, the present disclosure will be described more specifically with reference to examples and a comparative example. Note that the present disclosure is not at all limited to these examples.

The following materials were prepared.

### Resins for composite particles

Polyamide 12 (PA12): "L1901" available from Daicel-Evonik Corporation
Polyamide 1010 (PA1010): "DS22" available from Daicel-Evonik Corporation
Alicyclic polyamide (alicyclic PA): "Trogamid CX7323" available from Daicel-Evonik Corporation

### Inorganic fillers for composite particles

Silica filler (fumed silica surface-treated with hexamethyldisilazane) (hydrophobic fumed silica): "RX50" available from Aerosil
Silica filler (fumed silica surface-treated with dimethyldichlorosilane) (hydrophobic fumed silica): "R972V" available from Aerosil

### Thermosetting resin

Epoxy resins: "jER828" available from Mitsubishi Chemical Corporation

### Curing Agent

Amine-based curing agent: "jER Cure W" available from Mitsubishi Chemical Corporation

### Example 1

First, 90 parts by weight of Polyamide 12, 10 parts by weight of the silica filler (RX50), and a poly(ethylene glycol) serving as an aqueous medium were melt-kneaded by heating with an extruder and extruded from a die of the extruder, and a melt-kneaded product was obtained.

Next, the melt-kneaded product was subjected to forced cooling using a spot cooler.

While the melt-kneaded product was then filtered using an aspirator and a glass filter, precursor particles remaining on the glass filter were washed with water.

Next, the precursor particles were dried at 90°C for 24 hours using a dehumidifying dryer, and composite particles were obtained. FIG. 1 illustrates an SEM photograph of a cross section of the composite particle in Example 1.

Next, the epoxy resin and the composite particles were stirred under conditions of 80°C and 300 rpm for six hours using a hot stirrer, and a mixture was obtained.

Then, the mixture was allowed to stand in a vacuum vessel for one hour and thus the mixture was defoamed.

Next, a curing agent was added to the defoamed mixture, and the mixture was stirred and defoamed, and a thermosetting resin composition (composite particles: 20 wt.%) was obtained.

### Examples 2 to 6 and Comparative Example 1

Thermosetting resin compositions (composite particles: 20 wt.%) were obtained in the same manner as in Example 1 except that the blending ratios of the composite particles were as shown in Table 1 below.

### Median diameter and sphericity of composite particles

The median diameter and sphericity of the composite particles were measured by the methods described above.

The median diameter and sphericity of the composite particles are shown in Table 1 below.

### Retention ratio of K_{IC}

K_{IC} of a cured product obtained by curing the thermosetting resin composition at 175°C and K_{IC} of a cured product obtained by curing the thermosetting resin composition at 200°C were measured by the methods described above.

In addition, the retention ratio of K_{IC} was determined by the method described above.

K_{IC} of the cured product obtained by curing the thermosetting resin composition at 175°C, Kic of the cured product obtained by curing the thermosetting resin composition at 200°C, and the retention ratio of K_{IC} are shown in Table 1 below.

**Table 1**

| | | | Example 1 | Example 2 | Example 3 | Example 4 | Example 5 | Example 6 | Comparative Example 1 |
|---|---|---|---|---|---|---|---|---|---|
| Blending ratio (parts by weight) of composite particles | Second resin | PA12 | 90 | 70 | 75 | | | 99 | 100 |
| | | PA1010 | | | | 80 | | | |
| | | Alicyclic PA | | | | | 80 | | |
| | Inorganic filler | Silica filler (RX50) | 10 | 30 | | 20 | 20 | | |
| | | Silica filler (R972V) | | | 25 | | | 1 | |
| Composite particles | Median diameter (µm) | | 10 | 18 | 12 | 16 | 15 | 51 | 53 |
| | Sphericity (%) | | 97 | 97 | 98 | 98 | 96 | 90 | 91 |
| Thermosetting resin composition | K_{IC} (kJ/m²) | 175°C | 1.03 | 0.87 | 0.93 | 0.95 | 0.97 | 1.10 | 1.13 |
| | | 200°C | 0.98 | 0.86 | 0.90 | 0.93 | 0.96 | 0.95 | 0.95 |
| | Retention ratio (%) of K_{IC} | | 95 | 99 | 97 | 98 | 99 | 86 | 84 |

As shown in Table 1, the retention ratio of K_{IC} was greater in Examples 1 to 6, which were within the range of the present disclosure, than that in Comparative Example 1.

Thus, this reveals that according to the present disclosure, there can be provided a curable resin composition that forms a thermoset product whose toughness hardly changes even when the curing temperature changes.

The following reasons are considered for the greater retention ratio of K_{IC} in Examples 1 to 6 than that in Comparative Example 1.

Because the inorganic substance in the inorganic filler has a linear expansion coefficient smaller than that of the resin, the inorganic filler has a thermal expansion smaller than that of the resin also during thermal curing at a high temperature of 200°C. This also results in a smaller shrinkage in the inorganic filler than in the resin in a cooling process after the thermal curing.

From this, it is construed that the cured product of the resin composition containing the composite particles containing the inorganic filler has a reduced residual stress and consequently the toughness of the thermoset product hardly changes even when the curing temperature changes.

## Claims

1. A thermosetting resin composition comprising: a first resin that is a thermosetting resin; and composite particles, wherein
the composite particles include a second resin and an inorganic filler, and
an amount of the inorganic filler in a total amount of the second resin and the inorganic filler is from 0.1 to 70 wt.%.

2. The thermosetting resin composition according to claim 1, wherein the inorganic filler includes at least one selected from the group consisting of silica, titanium oxide, zinc oxide, bentonite, kaolin, and carbon black.

3. The thermosetting resin composition according to claim 1 or 2, wherein the second resin includes at least one selected from the group consisting of a polyamide resin, a polyimide resin, and a poly(ether sulfone) resin.

4. The thermosetting resin composition according to claim 1 or 2, wherein a median diameter of the composite particles is from 1 to 100 µm.

5. The thermosetting resin composition according to claim 1 or 2, wherein a sphericity of the composite particles is 95% or greater.

6. The thermosetting resin composition according to claim 1 or 2, wherein a retention ratio of plane strain fracture toughness (K_{IC}) determined by an equation below is 85% or greater: retention ratio of plane strain fracture toughness (KIC) = (plane strain fracture toughness (KIC) of a cured product formed by curing the thermosetting resin composition at 200°C)/(plane strain fracture toughness (KIC) of a cured product formed by curing the thermosetting resin composition at 175°C) x 100.

7. The thermosetting resin composition according to claim 1 or 2, wherein the first resin includes at least one selected from the group consisting of an epoxy resin and a phenolic resin.

8. The thermosetting resin composition according to claim 1 or 2, wherein an amount of the composite particles is from 1 to 20 parts by weight per 100 parts by weight of the first resin.

9. A thermoset product formed by thermally curing the thermosetting resin composition described in claim 1 or 2.
